# EUROPÄISCHE PATENTANMELDUNG

(11) **EP 0 860 317 A2**
(43) Veröffentlichungstag der Anmeldung: **26.08.1998**
(21) Anmeldenummer: 98102225.4
(22) Anmeldetag: 09.02.1998
(51) Int. Cl.: B60N 2/20

(54) **Verriegelsvorrichtung für klappbare Rückenlehnen**

(30) Priorität: 20.02.1997 DE 19706786
(71) Anmelder: R. SCHMIDT GMBH, 57368 Lennestadt (DE)
(72) Erfinder: Schmidt, Reinhard, 57368 Lennestadt (DE)
(74) Vertreter: Nöth, Heinz, Dipl.-Phys.

(57) **Zusammenfassung**

Die Erfindung betrifft eine Verriegelungsvorrichtung für klappbare Rückenlehnen mit einem ortsfesten Bügel und einem an der Rückenlehne angebrachten Schloß, wobei ein Drehriegel 6 in einem Gehäuse 3, 4 des Schlosses 1 drehbar gelagert ist und eine Aufnahme 13 für den Bügel 2 aufweist, und wobei ein bewegbares Sperrteil 20 vorgesehen ist, das in seiner Sperrstellung den Drehriegel 6 in einer Riegelstellung blockiert und in seiner Entsperrstellung den Drehriegel 6 für eine Öffnungsbewegung freigibt. Der Drehriegel 6 weist eine zusätzliche Abstützung 23 auf, die bei verriegeltem Drehriegel 6 eine über den Bügel 2 aufgebrachte Zugkraft am Gehäuse 3, 4 abstützt.

## Beschreibung

Die Erfindung betrifft eine Verriegelungsvorrichtung für klappbare Rückenlehnen, insbesondere von Personenkraftwagen, mit den Merkmalen des Oberbegriffs des Anspruchs 1.

Die Rücksitze heutiger Personenkraftwagen weisen meist nach vorne umklappbare Rückenlehnen auf, um den Kofferraum oder den Kombiladeraum bei Bedarf zu vergrößern. Die Rückenlehne kann dabei als Gesamtheit oder bei einer teilbaren Rückenlehne in einzelnen Elementen umgeklappt werden. In jedem Fall muß die Rückenlehne in hochgeklappter Stellung an der Karosserie sicher verriegelt sein, so daß sie auch bei einem Unfall ihre Position beibehält und zusammen mit einem Sicherheitsgurtsystem einer auf dem Rücksitz sitzenden Person ausreichenden Halt bieten kann. Eine wesentliche Bedeutung hat daher eine Verriegelungsvorrichtung für eine solche klappbare Rückenlehne, die auch als Hinterrückenarretierung bezeichnet wird. Diese Verriegelungsvorrichtung muß einfach zu bedienen sein und muß dennoch die im Bedarfsfall möglicherweise auftretenden hohen Verformungskräfte aufnehmen können, ohne sich zu öffnen und die Rückenlehne aus ihrer Verriegelungsstellung freizugeben.

Aufgabe der vorliegenden Erfindung ist es, eine derartige Verriegelungsvorrichtung zu schaffen, die bei einfachem Aufbau eine verbesserte Fähigkeit zur Aufnahme von auftretenden Kräften aufweist.

Diese Aufgabe wird durch eine Verriegelungsvorrichtung mit den Merkmalen des Anspruchs 1 gelöst. Vorteilhafte Ausgestaltungen der Erfindung sind in den Unteransprüchen angegeben.

Durch die zusätzliche Abstützung des Drehriegels wird eine über einen karosseriefesten Bügel auf den verriegelten oder verschlossenen Drehriegel eingeleitete Zugkraft auf direktem Weg in das an der Rückenlehne befestigte Gehäuse eingeleitet. Der Drehriegel muß nur auf dem Kraftflußweg ausreichend dimensioniert sein. Die Drehlagerung des Drehriegels übernimmt im wesentlichen die Lagerfunktion für den Drehriegel, sie ist jedoch von der vom Bügel aufgebrachten Zugkraft weitgehend entlastet, so daß diese Drehlagerung einfach gebaut und dimensioniert werden kann. Die zusätzliche Abstützung kann eine ebene Anlagefläche an einer Umfangsseite des Drehriegels sein, die derart im Verhältnis zur Drehachse des Drehriegels liegt, daß sie sich beim Schließen oder Verriegeln des Drehteils an eine zugeordnete Gegenfläche am Gehäuse, die insbesondere an einer stabilen Grundplatte des Gehäuses vorgesehen ist, fest oder mit geringem Spiel anlegt. Ist ein geringes Spiel vorgesehen, so ist zweckmäßigerweise die Lagerung des Drehriegels in Richtung der Zugkraft des Bügels soweit nachgiebig oder elastisch, daß sich der Drehriegel über das Spiel verschieben kann und an der Gegenfläche zur Abstützung anlegt.
Die Abstützung über das Sperrteil und die Abstützung über die zusätzliche Anlagefläche liegen zweckmäßigerweise auf gegenüberliegenden Seiten einer durch den Bügel verlaufenden Längsebene, so daß die eingeleitete Zugkraft weitgehend symmetrisch in das Gehäuse bzw. die Grundplatte eingeleitet wird.
Das Gehäuse kann mit der Grundplatte einstückig hergestellt sein. Zweckmäßigerweise weist jedoch das Schloß ein den Drehriegel aufnehmendes Riegelgehäuse auf, das an der stabilen Grundplatte befestigt ist. Da das Riegelgehäuse im wesentlichen nur die Lagerung des Drehriegels und des Sperrteils übernimmt, kann es einfacher gebaut sein und es muß nicht die höheren Festigkeitsanforderungen der Grundplatte erfüllen. Zweckmäßigerweise ist das Riegelgehäuse daher aus Kunststoff oder als einfaches Blechbiegeteil hergestellt.
Wenn ein in dem Drehriegel enthaltener Riegelschlitz, der sich zum Rand des Drehriegels hin öffnet und durch die damit gebildete Einlaßöffnung den Bügel aufnehmen kann, derart angeordnet ist, daß er bei geschlossener und einen Bügel verriegelt haltender Position des Drehriegels eine Neigung zur Senkrechten auf die Richtung der Zugkraft des Bügels aufweist, wobei sich die Neigung von der Einlaßöffnung in Richtung der Zugkraft neigt, so wird der Bügel in dem Riegelschlitz bzw. an einem daran gebildeten Riegelzapfen bei größerer Zugkraft von der Einlaßöffnung weg und zu einem Riegelschlitzgrund in das Innere des Drehriegels sich bewegen. Die Flexibilität des Bügels ist für diese Bewegung senkrecht zur Längsebene des Bügels ausreichend. Durch diese Bewegung kann der Bügel näher zu der zusätzlichen Abstützung gelangen, wodurch der Weg des Kraftflusses in dem Drehriegel verkürzt wird.
An dem Drehriegel kann ein Vorsprung oder eine Nase ausgebildet sein, die sich bei geschlossenem Drehriegel an einer Seite der Sperrteils befindet und bei Zugkrafteinleitung in einen Eingriff mit dem Sperrteil kommt, der das Sperrteil in seiner Sperrstellung hält oder das Sperrteil zusätzlich noch durch eine Kraftkomponente in Richtung der Sperrstellung drückt. Zweckmäßigerweise ist diese Seite des Sperrteils keilförmig geneigt, wobei die Neigung gegen eine Öffnungsbewegung des Sperrteils gerichtet ist.

Die erfindungsgemäße Verriegelungsvorrichtung ist für ein- oder mehrteilige klappbare Rückenlehnen von Fahrzeugen geeignet und kann auch die bei einem Unfall an der Rückenlehne auftretenden hohen Querkräfte und Biegemomente sicher aufnehmen.

Nachfolgend wird die Erfindung anhand eines Ausführungsbeispiels unter Bezugnahme auf Zeichnungen näher erläutert. Es zeigt:
- Fig. 1: eine Querschnittsansicht der erfindungsgemäßen Verriegelungsvorrichtung in einer Riegelstellung;
- Fig. 2: eine Seitenansicht der Verriegelungsvorrichtung mit eingezeichneter Schnittebene A - A der Fig. 1;
- Fig. 3: eine Querschnittsansicht der Verriegelungsvorrichtung entsprechend Fig. 1 in einer Entriegelstellung; und
- Fig. 4: eine Oberansicht der Verriegelungsvorrichtung in Riegelstellung gemäß Fig. 1.

Eine erfindungsgemäße Verriegelungsvorrichtung weist ein Schloß 1 und einen Bügel 2 auf, an dem das Schloß 1 verriegelbar ist. Der Bügel 2 ist an einem karosseriefesten Teil wie z. B. einem Radhaus (nicht dargestellt) befestigt und erstreckt sich im Fahrzeug nach vorne zu einer klappbaren Rückenlehne (nicht dargestellt), an der das Schloß 1 derart befestigt ist, daß es bei hochgeklappter Normalstellung der Rückenlehne den Bügel 2 ergreifen und somit die Rückenlehne in dieser Stellung verriegeln kann.

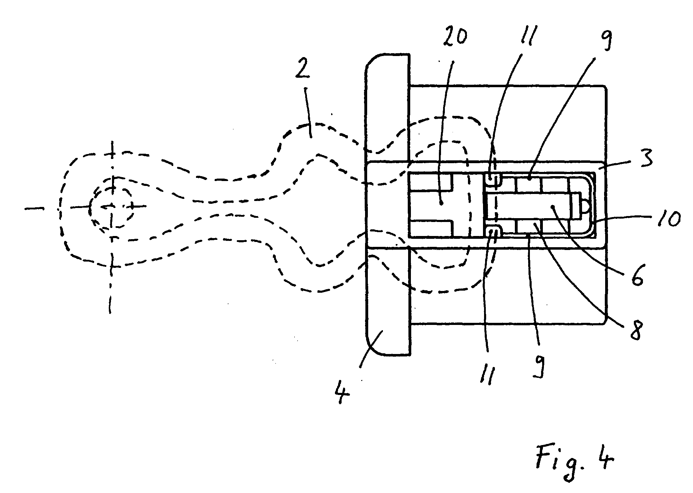

Das Schloß 1 weist ein Riegelgehäuse 3 und eine Grundplatte 4 auf, in der eine Öffnung 5 zum Durchtritt des Bügels 2 vorgesehen ist. In dem Gehäuse 3 ist ein Drehriegel 6 mit einer Lagerung 7 drehbar gelagert. Die Lagerung 7 enthält beispielsweise einen Drehzapfen 8, der mit seinen beiden Enden 9 (Fig. 4) in zugeordneten Lagerausnehmungen in einem Lagerblech 10 gelagert ist. Das Lagerblech 10 ist U-förmig geformt (siehe Fig. 4), liegt an den Innenseiten des Gehäuses 3 in dem der Öffnung 5 gegenüberliegenden Bereich an und wird durch zwei längliche Erhebungen 11, die an den sich gegenüberliegenden Innenseiten des Gehäuses 3 ausgebildet oder angebracht sind, in seiner Position gehalten.

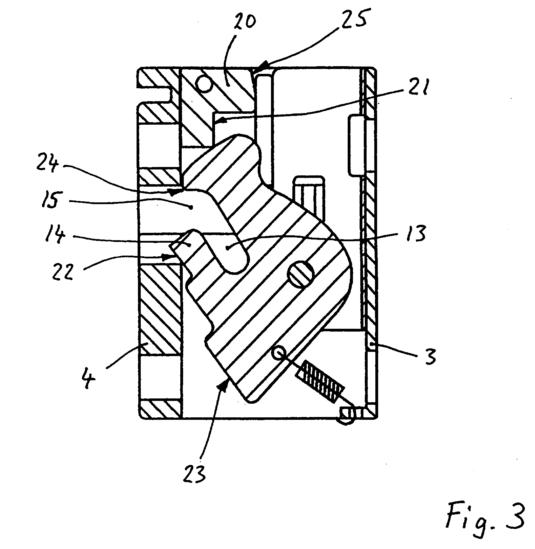

Eine Zugfeder 12 verbindet den Drehriegel 6 mit dem Gehäuse 3 und spannt den Drehriegel 6 in seine geöffnete Position vor (Fig. 3) zum Aufnehmen des Bügels 2 (Entriegelstellung des Drehriegels 6).

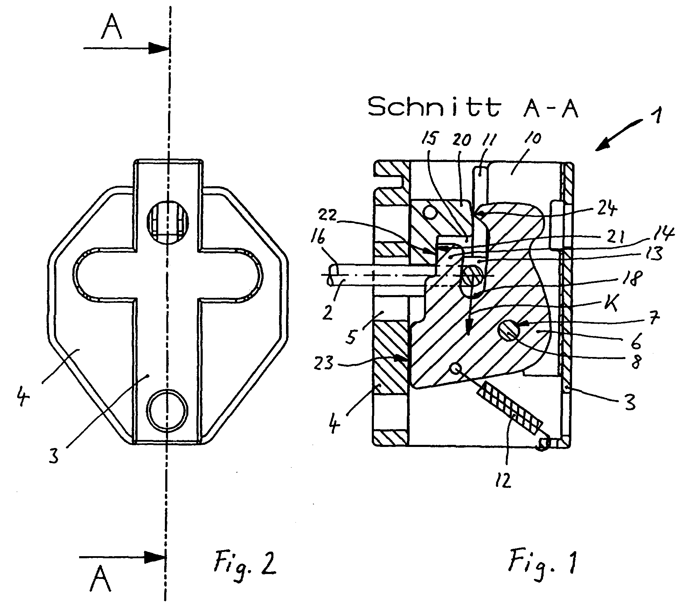

Der Drehriegel 6 ist als flache Platte mit einem Riegelschlitz 13 und einem Riegelzapfen 14 ausgebildet. Der Riegelschlitz 13 verläuft derart von einem Öffnungs- oder Eintrittsbereich 15 am äußeren Rand des Drehriegels 6 in das Innere des Drehriegels 6, daß er in der Riegelstellung gemäß Fig. 1 leicht geneigt zur Senkrechten auf eine Längsachse oder -ebene 16 des Bügels verläuft. Der Riegelzapfen 14 ist dann in seinem an dem Bügel 2 anliegenden Bereich 17 ebenso geneigt, so daß bei einer Zugbelastung des Bügels 2 relativ zum Schloß 1, wie sie z. B. aufgrund einer durch Trägheitskraft bedingten Vorverlagerung der Rückenlehne bei einem Unfall auftritt, dem Bügel 2 eine in Richtung des Riegelschlitzes 14 gerichtete Kraftkomponente (in Fig. 1 in Pfeilrichtung K abwärts gerichtet) aufgeprägt wird, die den Bügel 2, der senkrecht zu seiner Längsachse 16 in gewissem Maße federelastisch ist, zu einem Schlitzende 18 im Drehriegel 6 drückt. Dadurch wird der Bügel 2 gegen Herausrutschen aus dem Riegelschlitz 13 geschützt.

In dem Gehäuse 3 ist ein Sperrteil 20 enthalten, das an den sich gegenüberliegenden Innenseiten des Gehäuses 3 sowie an den beiden länglichen Erhebungen 11 und an der Grundplatte 4 verschiebbar gelagert ist. Das Sperrteil 20 weist eine Sperrfläche 21 auf, mit der es in seiner Sperrstellung (siehe Fig. 1) im Eingriff mit einer Stützfläche 22 am Riegelzapfen 14 ist und somit eine Drehung des Drehriegels 6 (in Gegenuhrzeigerrichtung in Fig. 1) zum Öffnen des Schlosses 1 verhindert. Eine vom Bügel 2 über den Riegelzapfen 14 auf das Sperrteil 20 aufgebrachte Zugkraft wird in direktem geradlinigen Kraftfluß an der stabil ausgebildeten Grundplatte 4 abgestützt.

Der Drehriegel 6 weist eine zusätzliche Abstützfläche 23 auf, die bei geschlossenem oder verriegeltem Drehriegel 6 an der Grundplatte 5 anliegt oder von ihr geringfügig beabstandet ist. Eine vom Bügel 2 eingeleitete Zugkraft wird somit über das Sperrteil 20 und über die zusätzliche Abstützfläche 23 in die Grundplatte 4 eingeleitet. Bei einer Ausführungsform, in der die Abstützfläche 23 in unbelasteter Riegel- oder Schließstellung nicht direkt an der Grundplatte 4 anliegt, wird sich die Lagerung 7 bei einer erhöhten Zugkraft verformen und in Zugkraftrichtung nachgeben, bis die Abstützfläche 23 an der Grundplatte 4 anliegt. Die Verformung der Lagerung 7 kann beispielsweise eine reversible Verformung des Lagerblechs 10 oder eines aus Kunststoff hergestellten Riegelgehäuses 3 sein, das in begrenztem Maße nachgiebig ist.
Wird über den Bügel 2 eine der Zugkraft entgegengesetzte Druckkraft eingeleitet (z. B. bei einem Auffahrunfall von hinten), so stützt das Lagerblech 10 die in den Drehriegel 6 eingeleitete Kraft am Gehäuse 3 ab, wobei sich der Drehriegel 6 wiederum mit seiner Abstützfläche 23 an der Grundplatte 4 abstützt.

Der Drehriegel 6 weist des weiteren eine Nase 24 auf, die bei geschlossenem oder verriegeltem Drehriegel 6 im Bereich des Sperrteils 20 benachbart zu einer Keilfläche 25 des Sperrteils 20 angeordnet ist. Diese Keilfläche 25 ist derart am Sperrteil 20 ausgebildet, daß, wenn eine Zugkraft auf den Drehriegel 6 eingeleitet wird und dieser sich geringfügig in Zugrichtung bewegt, die Nase 24 auf die Keilfläche 25 drückt und eine Kraftkomponente auf das Sperrteil 20 in Schließstellung wirkt und somit als Sicherung gegen eine Bewegung des Sperrteils 20 in Entsperrstellung dient.

Das Sperrteil 20 ist durch eine Vorspannkraft in Schließoder Sperrstellung (Fig. 1) vorgespannt und kann gegen diese Vorspannkraft beispielsweise durch ein Hebelgetriebe oder durch einen Bowdenzug in die Entriegel- oder Offenstellung (Fig. 3) bewegt werden. Die Vorspannkraft kann durch eine Feder oder eine andere elastische Krafteinrichtung erzeugt werden.

Der Bügel 2 ist als geschlossener Drahtbügel ausgebildet, der sich bei übermäßiger Zugspannung verformen und in Längsrichtung um eine begrenzte Strecke verlängern kann.

Auf das Schloß wirkt eine Federkraft in Kipprichtung der Rückenlehne (nach rechts in Fig. 1), so daß in verriegelter Stellung eine geringe Zugkraft vom Bügel 2 auf den Drehriegel 6 ausgeübt wird. Damit ist gewährleistet, daß ein ggfs. vorhandenes Spiel zwischen den Bauteilen des Schlosses beseitigt ist und das Schloß somit nicht klappern wird. Die Federkraft kann durch eine Polsterung, eine Innenauskleidung oder durch andere Federelemente bereitgestellt werden.

Die Feder 12 unterstützt beim Öffnen oder Entriegeln des Schlosses 1 die Drehbewegung des Drehriegels 6 (von der Stellung in Fig. 1 zu der Stellung in Fig. 3) zur raschen Freigabe des Bügels 2, nachdem das Sperrteil 20 in seine Entsperrstellung bewegt worden ist. Die Nase 24 des Drehriegels 6 taucht dann sofort unter das Sperrteil 20, so daß ein erneutes Verriegeln bei nur kurzer Betätigung des Schlosses verhindert wird. Zusätzlich bewirkt die Feder 12, daß bei geöffnetem Schloß der Drehriegel 6 immer in der Stellung bleibt (siehe Fig. 3), in der der Riegelschlitz 13 zur Öffnung 5 des Gehäuses 3 hin geöffnet ist, so daß jederzeit der Bügel 2 in den Riegelschlitz 13 eintauchen kann. Eine Fehlfunktion wird dadurch verhindert.

## Patentansprüche

1. Verriegelungsvorrichtung für klappbare Rückenlehnen mit einem ortsfesten Bügel und einem an der Rückenlehne angebrachten Schloß,
**dadurch gekennzeichnet,**
daß ein Drehriegel (6) in einem Gehäuse (3, 4) des Schlosses (1) drehbar gelagert ist und eine Aufnahme (13) für den Bügel (2) aufweist, und
daß ein bewegbares Sperrteil (20) vorgesehen ist, das in seiner Sperrstellung den Drehriegel (6) in einer Riegelstellung blockiert und in seiner Entsperrstellung den Drehriegel (6) für eine Öffnungsbewegung freigibt, wobei der Drehriegel (6) eine zusätzliche Abstützung (23) aufweist, die bei verriegeltem Drehriegel (6) eine über den Bügel (2) aufgebrachte Zugkraft am Gehäuse (3, 4) abstützt.

2. Verriegelungsvorrichtung nach Anspruch 1, dadurch gekennzeichnet, daß das Gehäuse (3, 4) des Schlosses (1) eine Grundplatte (4) und ein den Drehriegel (6) aufnehmendes Riegelgehäuse (3) aufweist.

3. Verriegelungsvorrichtung nach Anspruch 1 oder 2, dadurch gekennzeichnet, daß die zusätzliche Abstützung (23) von einer Anlagefläche (23) des Drehriegels (6) und einer Gegenfläche am Gehäuse (3) bzw. der Grundplatte (4) gebildet ist.

4. Verriegelungsvorrichtung nach einem der Ansprüche 1 bis 3, dadurch gekennzeichnet, daß der Drehriegel (6) einen Riegelschlitz (13) zur Aufnahme des Bügels (2) aufweist, der in dem Drehriegel (6) in dessen verriegelter Position zu einer Längsebene (16) des Bügels (2) derart geneigt verläuft, daß eine von dem Bügel (2) auf das Drehteil (6) wirkende Zugkraft den Bügel (2) in Richtung eines inneren Riegelschlitzendes (18) drückt.

5. Verriegelungsvorrichtung nach Anspruch 4, dadurch gekennzeichnet, daß das Sperrteil (20) in seiner Sperrstellung einen am Riegelschlitz (13) angrenzenden Riegelzapfen (14) des Drehriegels (6) blockiert.

6. Verriegelungsvorrichtung nach Anspruch 4 oder 5, dadurch gekennzeichnet, daß bei verriegeltem Schloß (1) eine vom Bügel (2) auf den Riegelzapfen (14) eingeleitete Zugkraft über das Sperrteil (20) am Gehäuse (3) bzw. an der Grundplatte (4) abgestützt ist.

7. Verriegelungsvorrichtung nach einem der Ansprüche 1 bis 6, dadurch gekennzeichnet, daß der verriegelte Drehriegel (6) bei Zugkraftbelastung durch den Bügel (2) in einen Halteeingriff am Sperrteil (20) bewegt ist.

8. Verriegelungsvorrichtung nach Anspruch 7, dadurch gekennzeichnet, daß der Halteeingriff gebildet ist, indem eine Nase (24) des Drehriegels (6) auf eine am Sperrteil (20) ausgebildete Keilfläche (25) drückt und dabei eine Kraftkomponente in Sperrichtung des Sperrteils (20) erzeugt.

9. Verriegelungsvorrichtung nach einem der Ansprüche 1 bis 8, dadurch gekennzeichnet, daß das Sperrteil (20) durch eine Vorspannkraft in seiner Sperrstellung gehalten ist.

10. Verriegelungsvorrichtung nach einem der Ansprüche 1 bis 9, dadurch gekennzeichnet, daß der Drehriegel (6) an einem Lagerblech (10) drehbar gelagert ist, das in dem Riegelgehäuse (3) des Schlosses (1) enthalten ist.

11. Verriegelungsvorrichtung nach einem der Ansprüche 1 bis 10, dadurch gekennzeichnet, daß die Lagerung (7) des Drehriegels (6) bei Zugkraftbelastung nachgiebig ist.

12. Verriegelungsvorrichtung nach einem der Ansprüche 1 bis 11, dadurch gekennzeichnet, daß der Drehriegel (6) durch eine Spanneinrichtung (12) in Offenstellung zur Aufnahme des Bügels (2) vorgespannt ist.

13. Verriegelungsvorrichtung nach Anspruch 12, dadurch gekennzeichnet, daß die Spanneinrichtung (12) eine Zugfeder (12) ist, die den Drehriegel (6) mit dem Gehäuse (3) verbindet.

14. Verriegelungsvorrichtung nach einem der Ansprüche 2 bis 13, dadurch gekennzeichnet, daß das Riegelgehäuse (3) aus Kunststoff hergestellt ist.

15. Verriegelungsvorrichtung nach einem der Ansprüche 1 bis 14, dadurch gekennzeichnet, daß der Bügel (2) an einem Radhaus einer Fahrzeugkarosserie befestigt ist.

16. Verriegelungsvorrichtung nach einem der Ansprüche 1 bis 15, dadurch gekennzeichnet, daß der Bügel (2) ein geschlossener Drahtbügel ist, der sich bei Überschreiten einer bestimmten Zugkraft in Zugrichtung begrenzt verformt.

17. Verriegelungsvorrichtung nach einem der Ansprüche 1 bis 16, dadurch gekennzeichnet, daß das Schloß (1) durch eine elastische Kraft in Riegelstellung vom Bügel (2) weggedrückt ist.
